# FASCICULE DE BREVET EUROPEEN

(11) **EP 0 954 868 B1**
(45) Date de publication et mention de la délivrance du brevet: **04.09.2002**
(21) Numéro de dépôt: 98902050.8
(22) Date de dépôt: 09.01.1998
(51) Int. Cl.: H01B 7/18

(54) **GAINE POUR FAISCEAUX DE FILS**
KABELBÜNDELMANTEL
SHEATH FOR BUNCH OF WIRES

(30) Priorité: 22.01.1997 FR 9700637
(43) Date de publication de la demande: 10.11.1999
(73) Titulaire: PLASTO SA, 21304 Chenove Cédex (FR)
(72) Inventeur: DURAND, Hervé, F-21000 Dijon (FR); NICOLE, Brigitte, F-21240 Talant (FR)
(74) Mandataire: Hubert, Philippe
(86) Numéro de dépôt international: FR9800034
(87) Numéro de publication internationale: WO98033191

(56) Documents cités:
- DE-A- 2 417 405
- FR-A- 2 664 850
- US-A- 5 113 039

## Description

La présente invention concerne le gainage des faisceaux, notamment les faisceaux de conducteurs électriques dans les véhicules automobiles.

### Art antérieur

Dans les véhicules automobiles notamment, on utilise de plus en plus de conducteurs électriques du fait que de nombreuses fonctions nouvelles sont offertes aux usagers, comme par exemple les commandes de lève-vitre, de réglage de siège, fermeture centralisée. Les nombreux fils conducteurs d'électricité sont regroupés en faisceaux de manière à limiter la place occupée dans les diverses parties de l'automobile. Mais le regroupement en faisceaux a posé également le problème de rechercher et de trouver le moyen de réaliser des gaines appropriées, aptes à recevoir et à protéger les faisceaux de fils de manière efficace. Plus particulièrement, la gaine doit résister aux températures développées par exemple dans le compartiment moteur, être étanche afin d'isoler les faisceaux de fils, présenter des propriétés d'isolation phonique afin de réduire au minimum le bruit qui pourrait être perçu par les usagers, et enfin avoir une bonne résistance mécanique pour éviter une usure prématurée due aux frottements sur la structure du véhicule à laquelle elle est fixée. Une telle liste est loin d'être exhaustive.

On connaît différentes techniques qui permettent de maintenir les fils en faisceau dans les automobiles :
- le procédé classique consiste à enrubanner le faisceau de fils à l'aide d'une bande adhésive ou non adhésive que l'on enroule en tournant autour du faisceau pour former un enroulement à spires chevauchantes ; ce procédé permet d'obtenir des faisceaux bien groupés, mais nécessite des machines encombrantes et dont la productivité est limitée ;
- un autre procédé consiste à utiliser des gaines annelées fendues longitudinalement, dans lesquelles on introduit les fils en forçant l'ouverture de la fente qui se referme ensuite grâce à l'élasticité des anneaux. Ce type de gaine peut être réalisé en polyamide, ce qui lui confère une bonne résistance à la température et une utilisation possible dans le compartiment moteur des voitures. Ces gaines présentent cependant des inconvénients nombreux : leur rigidité interdit les courbes à faible rayon, les bords de la fente et les extrémités sont agressifs et peuvent blesser les doigts des opérateurs et la protection isolante des fils ; il est pratiquement impossible de fermer la fente de façon étanche et, les fils peuvent générer des bruits de chocs avec la paroi de la gaine si celle-ci n'est pas recouverte à l'intérieur d'un matériau amartisseur ;
- un troisième procédé connu utilise des rubans de matière souple que l'on replie en forme de gouttière autour des fils et dont il faut ensuite assembler les deux lisières pour fournir une gaine. On peut utiliser une bande adhésivée sur sa face intérieure et assembler les deux lisières en mettant les deux lisières adhésives face à face pour obtenir un assemblage en drapeau, ou, selon un autre procédé d'assemblage décrit dans FR-2 664 850, mettre en oeuvre une bande de matière thermosoudable dont on soude les deux lisières de façon autogène au moyen d'un jet d'air chaud. Les matières dans lesquelles sont confectionnées les bandes destinées à une telle utilisation, sont actuellement des mousses de polyéthylène en raison de leur bonne souplesse et de leur aptitude à se thermosouder. La résistance mécanique de cette matière étant faible, il est proposé d'utiliser une mousse de polyéthylène renforcée par une grille en polyamide : la structure en grille pour le renfort est nécessaire pour que la face de chacune des lisières puisse se souder lorsque les deux bords de la gaine se recouvrent. En utilisant des mousses de polyéthylène à cellules fermées, la gaine obtenue est pratiquement étanche, mais dans le cas de l'assemblage des deux bords en drapeau, il existe un risque de décollement des bords sous l'effet de la température et cette technique d'assemblage conduit à des faisceaux plus encombrants, qu'il n'est pas possible de faire passer facilement dans des perforations. D'autre part, ces gaines en polyéthylène sont assez peu résistantes à la déchirure et ne résistent pas aux températures élevées ce qui limite leur domaine d'utilisation.

Des matériaux laminés complexes comprenant une couche de mousse assemblée à une couche de non-tissé sont connus et décrits dans US 4 851 283, GB 2 112 319 et JP 05 229 045. Ces matériaux complexes sont utilisés pour recouvrir des murs ou la fabrication de panneaux d'habillage intérieur des véhicules tels que par exemple le plafond et/ou les coffres desdits véhicules. Toutefois, les panneaux sont rigides et thermoformés pour être adaptés à la forme de la structure de support. De plus, la couche de mousse ne comprend pas nécessairement un pourcentage de cellules fermées car ils ne sont pas conçus pour constituer une barrière d'étanchéité ; cette dernière étant assurée par d'autres moyens. Les principales fonctions de tels panneaux sont d'assurer une isolation phonique et une certaine résistance mécanique. C'est la raison pour laquelle ils doivent être suffisamment épais, les complexés comprenant généralement des matières différentes pour la mousse et le non-tissé.

### Objet de l'invention

Dans le but d'obtenir des gaines pour faisceaux d'automobiles présentant des performances améliorées à la fois dans leur mise en oeuvre et dans leur aptitude à protéger efficacement les fils électriques dans les automobiles, on a trouvé qu'il pouvait être avantageux de réaliser de gaines à l'aide d'un matériau laminé, souple et conformable, comprenant une couche de mousse à cellules fermées associée intimement à une couche de non-tissé, les deux couches étant fabriquées à partir d'une même matière thermosoudable. La mise en oeuvre d'une bande du composite est faite de préférence suivant le procédé dans lequel on replie la bande en forme de gouttière et on soude ensemble les deux lisières qui se recouvrent pour former un cordon de soudure longitudinal.

### Description

Selon un aspect particulier de la présente invention on réalise le gainage des faisceaux au moyen d'une bande de matériau complexe laminé, ledit matériau de gainage comprenant une première couche sensiblement imperméable aux liquides d'une mousse de polyoléfine à cellules fermées et une seconde couche d'étoffe non-tissé également en polyoléfine.

De préférence, la couche de mousse et la couche de non-tissé sont toutes deux obtenues à partir d'un même type de matériau thermosoudable de façon à :
1) permettre l'assemblage des deux couches par un moyen thermique tel qu'un flammage ou un calandrage à chaud sans apport d'adhésif ou de matière fusible de collage,
2) autoriser une soudure autogène des deux bords du complexe après fermeture de la gaine autour du faisceau.

L'une des solutions techniques préférées pour la réalisation technique de l'invention consiste à utiliser l'assemblage d'une mousse de polypropylène non réticulé et d'un non-tissé également en polypropylène non réticulé. Cette matière, qui peut bénéficier d'un traitement ignifuge afin de ne pas propager la flamme, présente une bonne résistance à la chaleur et les gaines obtenues sont satisfaisantes pour être utilisées dans les parties principales des automobiles, telles que par exemple l'habitacle, le tableau de bord, le coffre et certains endroits du compartiment moteur. Le traitement ignifugeant peut être effectué par exemple
a) par mélange de produits retardateurs de flamme avec le polypropylène au moment de la formulation ; avant extrusion, de manière à faire en sorte que les composés soient dispersés dans la masse et/ou dans le non-tissé, ou
b) par pulvérisation des produits ignifugeants sur la mousse et/ou sur le non-tissé.

La couche de mousse doit être souple pour se conformer facilement : on préfère des mousses de polyoléfine comprenant au moins 80 % de cellules fermées, dont la densité est environ 25 à 100 kg/m³, de préférence 35 à 50 kg/m³, et obtenues sous forme d'une feuille d'épaisseur comprise entre 1 et 3 mm.

A titre d'exemple, les mousses extrudées en polypropylène non réticulé, à cellules fermées majoritaires, conviennent bien pour réaliser l'invention ; ces feuilles qui présentent un taux de cellules fermées important et une surface qui forme une peau, sont pratiquement imperméables aux liquides et permettent d'obtenir un matériau à la fois souple, étanche et insonorisant. Comme indiqué précédemment, il est avantageux d'utiliser une mousse de polyoléfine traitée pour être ignifuge et les feuilles de mousse de polypropylène ignifugées utilisées pour fabriquer le matériau sont disponibles dans le commerce.

La couche de matériau non tissé a pour fonction d'améliorer la résistance mécanique (résistance à la traction, résistance à la déchirure) et l'aspect de surface du complexe. Bien qu'il soit possible d'utiliser des constituants différents, on préfère utiliser un matériau non-tissé en polyoléfine de même nature que le constituant de la feuille de mousse : ce choix permet d'obtenir un complexe homogène qui peut être assemblé par calandrage à chaud sans apport d'adhésif : on obtient ainsi des gaines constituées d'un seul type de matière (par exemple le polypropylène) qui sont ainsi facilement recyclables. Pour obtenir un complexe satisfaisant, on utilise une couche de matériau non-tissé dont l'épaisseur est d'environ 0,3 à 0,8 mm et de masse surfacique d'environ 20 à 200 g/m² et de préférence 50 à 150 g/m²; accessoirement, la couche de matériau non-tissé peut avoir reçu un traitement ignifuge au moyen de retardateurs de propagation de la flamme. On peut également utiliser des textiles non-tissés ayant subi un traitement thermique (par exemple par points) destiné à améliorer la résistance mécanique. Un traitement thermique préféré est celui qui forme un quadrillage sur le non-tissé et qui est désigné comme étant un traitement par points. Le quadrillage peut être obtenu au moyen d'un cylindre moleté chaud qui tourne contre un cylindre plat (lisse). Un tel traitement renforce la résistance mécanique (traction, déchirure) du non-tissé qui est alors désigné comme étant thermofixé.

L'assemblage des deux couches peut être réalisé par toute méthode connue telle que des adhésifs, des films thermoscellants, par flammage ou calandrage à chaud. On préfère utiliser des complexes assemblés par calandrage à chaud qui évitent l'ajout d'adhésifs et assurent un assemblage stable à la température et une homogénéité de la matière.

Selon l'invention, on utilise le complexe formé de l'assemblage d'une couche de mousse et d'une couche de non-tissé pour fabriquer des gaines de faisceaux de fils. Les procédés de gainage mis en oeuvre avec ce complexe sont de préférence les procédés utilisant une bande du complexe que l'on replie autour du faisceau et que l'on soude de manière autogène au moyen d'un jet d'air chaud. Un tel procédé est décrit par exemple dans FR 2 664.850.

Selon ce procédé, le ruban est placé parallèlement sous le faisceau de fils, la face mousse étant contre les fils. Le passage dans le conformateur replie la bande autour des fils jusqu'à ce que les deux lisières de la bande se recouvrent en partie. On envoie alors un jet d'air chaud entre les deux lisières de façon à atteindre localement le point de ramollissement de la matière, puis on met en contact les deux lisières de façon à provoquer la soudure des deux lisières et obtenir la fermeture de la gaine. Selon ce procédé de fermeture de la gaine, on voit que la face externe (c'est-à-dire la face non-tissé) de la lisière interne ou recouverte (se trouvant près des fils) vient en contact avec la face interne (c'est-à-dire la face mousse) de la seconde lisière externe ou recouvrante de la bande : la matière des deux couches étant de même nature et thermosoudable, on se trouve dans les meilleures conditions pour obtenir une soudure solide des deux lisières.

En variante, lorsque le matériau du complexe est thermoformable, on peut également thermoformer la bande pour obtenir un tube fendu, puis ultérieurement introduire les fils par la fente et souder les deux bords de la fente, comme dans le procédé précédent, pour obtenir le faisceau gainé.

Selon ce procédé d'obtention de la gaine, on place la bande de façon à ce que la couche de mousse soit à l'intérieur de la gaine et la couche de non-tissé, plus résistante, à l'extérieur. Cette disposition présente l'avantage d'avoir un contact doux entre les fils et une surface plus résistante sur l'extérieur de la gaine.

Selon un autre aspect de l'invention, il peut être avantageux de choisir les deux couches de couleur différente, par exemple une couche de mousse blanche et la couche de non-tissé noire ; après fabrication, le faisceau sera de couleur noire (le non-tissé est à l'extérieur). La présence de mousse apparente sur certaines parties du faisceau, facile à repérer en raison du contraste de couleur, pourra servir de témoin soit en cas de défaut de soudure, soit en cas d'usure due à un frottement important qui aurait fortement dégradé la couche de textile non-tissé.

A titre d'exemple, on a réalisé une feuille de complexe à partir d'une feuille de mousse de polypropylène non réticulé, d'épaisseur 1 mm, de densité environ 35 kg/m³, contenant plus de 80 % de cellules fermées et ignifugée, sur laquelle on a fixé par calandrage à chaud une feuille de non-tissé en polypropylène, d'épaisseur 0,4 mm, d'une masse surfacique de 75 g/m².

La feuille de mousse de polypropylène est fournie par la société PSG Sentinel sous la référence Prop X® et le non-tissé est fourni par la société DON & LOW NONWOVENS sous la référence Daltex 1080 D3V00. La mousse est de couleur blanche translucide et le non-tissé, qui présente un aspect quadrillé obtenu par thermocompression, est de couleur noire. Selon l'invention, ce complexe a été découpé en bandes et utilisé pour fabriquer une gaine de faisceau par enroulement longitudinal et soudure autogène des deux bords au moyen d'air chaud à 180°C. On obtient ainsi un faisceau gainé étanche à l'eau et aux huiles et satisfaisant aux conditions de température correspondant à la classe T2.

A titre de comparaison, on a mesuré les performances de résistance d'une gaine obtenue selon l'invention (épaisseur 1,5 mm) et d'une gaine témoin connue en mousse de polyéthylène renforcée par une grille polyamide (épaisseur 2,5 mm). Les résultats comparatifs sont regroupés dans le tableau suivant :

| **Caractéristiques** | **Selon l'invention** | **Témoin** |
|---|---|---|
| Epaisseur (mm) | 1,4 à 1,6 | 2,4 à 2,6 |
| Classe de température | T2 (105°C continu) | T1 (85°C continu) |
| Stabilité dégradation | 240 h à 125°C | 240 h à 105°C |
| Rupture en traction | 50 N/cm | 13 N/cm |
| Allongement maxi | 60 % | 30 % |
| Résistance déchirure | | |
| longitudinale | 20 N | 2,5 N |
| transversale | 25 N | 5 N |

Les résultats obtenus montrent un net avantage de la gaine obtenue selon l'invention qui présente des caractéristiques nettement améliorées.

La résistance à la température de la gaine selon l'invention permet de lui attribuer un classement " T2 " et la résistance mécanique nettement améliorée réduit les risques de déchirures pendant la fabrication du faisceau, au moment du montage dans le véhicule et tout au long de la vie du véhicule. Il est à noter également que ces résistances sont obtenues avec un matériau moins épais que le produit de comparaison, que la mise en oeuvre sur les machines de gainage ne présente pas plus de difficulté technique et que, en raison de l'épaisseur moindre, la réserve de bande (et donc l'autonomie) des machines peut être sensiblement augmentée avec pour conséquence directe, une augmentation de productivité de l'atelier de fabrication des faisceaux de fils. Enfin, la gaine étant constituée uniquement de polypropylène, le recyclage des déchets, soit en cours de fabrication, soit à la fin de la vie du véhicule, s'en trouve facilité.

## Revendications

1. Gaine pour faisceaux de fils, du type constituée par un complexe comprenant une couche de matière alvéolaire et une couche de matière de renfort, **caractérisée en ce que** la couche de matière alvéolaire est une couche de mousse plastique comportant au moins 80 % de cellules fermées, **en ce que** la couche de matière de renfort est un non-tissé et **en ce que** les couches de mousse et de non-tissé sont réalisées dans une même matière.

2. Gaine pour faisceaux de fils selon la revendication 1, **caractérisée en ce que** ladite même matière est une polyoléfine.

3. Gaine pour faisceaux de fils selon la revendication 2, **caractérisée en ce que** la polyoléfine est un polypropylène non réticulé.

4. Gaine pour faisceaux de fils selon l'une des revendications 1 à 3, **caractérisée en ce qu'**au moins la couche de mousse est ignifugée.

5. Gaine pour faisceaux de fils selon la revendication 1, **caractérisée en ce que** la couche de non-tissé est préalablement traitée thermiquement.

6. Gaine pour faisceaux de fils selon l'une des revendications 1 à 5, **caractérisée en ce que** les deux couches sont assemblées par un procédé thermique tel qu'un calandrage à chaud ou un flammage.

7. Gaine pour faisceaux de fils selon l'une des revendications 1 à 6, **caractérisée en ce que** les deux couches sont de couleur différente.

8. Gaine pour faisceaux de fils selon l'une des revendications 1 à 7, **caractérisée en ce qu'**elle est confectionnée en repliant une bande comprenant les deux couches complexées, autour du faisceau de fils et en effectuant une soudure autogène longitudinale des deux lisières en regard.

9. Gaine pour faisceaux de fils selon l'une des revendications 1 à 7, **caractérisée en ce que** les deux couches sont thermosoudables.

## Patentansprüche

1. Kabelbündelmantel des Typs, der aus einer Anordnung besteht, die eine Schicht aus zellenförmigem Material und eine Verstärkungsschicht umfaßt, **dadurch gekennzeichnet, daß** die Schicht aus zellenförmigem Material eine Kunststoffschaumschicht ist, die mindestens 80% geschlossene Zellen aufweist, dadurch, daß die Verstärkungsschicht ein Vlies ist und dadurch, daß die Schaum- und die Vliesschicht aus einem gleichen Material hergestellt sind.

2. Kabelbündelmantel nach Anspruch 1, **dadurch gekennzeichnet, daß** das gleiche Material ein Polyolefin ist.

3. Kabelbündelmantel nach Anspruch 2, **dadurch gekennzeichnet, daß** das Polyolefin ein nicht vernetztes Polypropylen ist.

4. Kabelbündelmantel nach einem der Ansprüche 1 bis 3, **dadurch gekennzeichnet, daß** zumindest die Schaumschicht feuerfest gemacht ist.

5. Kabelbündelmantel nach Anspruch 1, **dadurch gekennzeichnet, daß** die Vliesschicht thermisch vorbehandelt ist.

6. Kabelbündelmantel nach einem der Ansprüche 1 bis 5, **dadurch gekennzeichnet, daß** die zwei Schichten durch ein thermisches Verfahren, wie beispielsweise Heißkalandrieren oder Flammen, zusammengefügt werden.

7. Kabelbündelmantel nach einem der Ansprüche 1 bis 6, **dadurch gekennzeichnet, daß** die zwei Schichten eine unterschiedliche Farbe haben.

8. Kabelbündelmantel nach einem der Ansprüche 1 bis 7, **dadurch gekennzeichnet, daß** er hergestellt wird, indem ein Band aus den zwei zusammengefügten Schichten um das Kabelbündel herum gefaltet wird und ein autogenes Schweißen längs der zwei gegenüberliegenden Ränder ausgeführt wird.

9. Kabelbündelmantel nach einem der Ansprüche 1 bis 7, **dadurch gekennzeichnet, daß** die zwei Schichten warmschweißbar sind.

## Claims

1. Sheath for wire bundles, of the type constituted by a complex comprising a layer of cellular material and a layer of reinforcing material, **characterised in that** the layer of cellular material is a layer of plastic foam having at least 80% of closed cells, **in that** the layer of reinforcing material is a nonwoven and **in that** the layers of foam and of nonwoven are made from the same material.

2. Sheath for wire bundles according to claim 1, **characterised in that** said same material is a polyolefin.

3. Sheath for wire bundles according to claim 2, **characterised in that** the polyolefin is an uncrosslinked polypropylene.

4. Sheath for wire bundles according to one of claims 1 to 3, **characterised in that** at least the foam layer is fireproofed.

5. Sheath for wire bundles according to claim 1, **characterised in that** the layer of nonwoven is heat treated beforehand.

6. Sheath for wire bundles according to one of claims 1 to 5, **characterised in that** the two layers are joined together using a thermal method such as hot calendering or localised sun bleaching.

7. Sheath for wire bundles according to one of claims 1 to 6, **characterised in that** the two layers are of different colour.

8. Sheath for wire bundles according to one of claims 1 to 7, **characterised in that** it is produced by folding a strip comprising the two complexed layers around the wire bundle and by producing a longitudinal autogenous weld along the two facing edges.

9. Sheath for wire bundles according to one of claims 1 to 7, **characterised in that** the two layers are heat-sealable.
